# EUROPÄISCHE PATENTSCHRIFT

(11) **EP 2 515 002 B1**
(45) Veröffentlichungstag und Bekanntmachung des Hinweises auf die Patenterteilung: **15.10.2014**
(21) Anmeldenummer: 11162843.4
(22) Anmeldetag: 18.04.2011
(51) Int. Cl.: F16H 57/03

(54) **Getriebegehäuse**
Transmission housing
Carter de transmission

(43) Veröffentlichungstag der Anmeldung: 24.10.2012
(73) Patentinhaber: Siemens Aktiengesellschaft, 80333 München (DE)
(72) Erfinder: Klein, Jana, 09337, Callenberg (DE); Kiesenbauer, Jens, 09322, Penig (DE)

(56) Entgegenhaltungen:
- DD-A1- 227 764
- DE-A1- 3 743 715
- DE-A1- 10 316 321
- DE-A1- 19 805 237
- DE-A1-102007 009 566
- US-A- 4 395 982

## Beschreibung

Die Erfindung betrifft ein Getriebegehäuse mit einer Gehäusewandung.

Getriebe, die der Wandlung von Drehzahl und Drehmoment dienen, umfassen leistungsführende Übertragungs- und Wandlerelemente, die im Allgemeinen von einem Gehäuse umgeben werden. Das Getriebegehäuse hat in Abhängigkeit der Art des Getriebes verschiedene Funktionen. Es dient der Aufnahme der einzelnen Komponenten des Getriebes, es bildet einen Raum für das Schmiermittel und schirmt das Getriebe von der Umgebung ab, was insbesondere während des Betriebes von Vorteil ist. Die Getriebekomponenten wie Übertragungs- und Wandlerelemente sind im Allgemeinen über Stütz- und Tragelemente mit dem Gehäuse verbunden. Im Betrieb wird infolge der Bewegung der Getriebekomponenten das mit den bewegten Komponenten verbundene Getriebegehäuse zu Schwingungen angeregt. Die im Allgemeinen großen Boden- und Wandflächen des Getriebegehäuses, die wenig strukturiert sind, begünstigen dabei die Schwingungsanregung, was mit einer erhöhten Geräuschentwicklung verbunden ist.

Getriebegehäuse sind in verschiedenen Ausgestaltungen aus dem Stand der Technik bekannt. Die DD 227764 A1 beispielsweise offenbart ein Getriebegehäuse für Getriebe mit kraftaufnehmenden Gehäuseteilen, vorrangig Getriebe einer Baugröße, welche definierte Kraftübertragungswege und - richtungen aufweist. Das Getriebegehäuse ist dabei derart ausgestaltet, dass die Anregung der kraftführenden Elemente, der geräuschabstrahlenden Gehäuseflächen und des Fundamentes auf ein Minimum gebracht wird. Dies wird erzielt, indem im Gehäuseinneren Zusatzmassen an den Wälzkörper-Lagerstühlen vorgesehen sind. Die Konzentration der Zusatzmassen erstreckt sich dabei wenigstens über den Winkelbereich, in welchem die möglichen Richtungen der radialen Kraftresultierenden der jeweiligen Lagerstelle liegen. So kann die Anregung der Gehäusewandflächen und der Fundamentierung gering gehalten werden. Die Zusatzmassen sind dabei über Stützen mit den Gehäusefüßen des Getriebegehäuses verbunden, deren Lage in Abhängigkeit der radialen Kraftrichtungen der jeweiligen Lagerstelle bestimmt ist.

An dieser Ausgestaltung wird als nachteilig empfunden, dass die möglichen Richtungen der radialen Kraftresultierenden an den jeweiligen Lagerstellen bekannt sein müssen, um die Position und die Beschaffenheit der Zusatzmassen festlegen zu können. Damit ist ein aufwendiger Konstruktions- und Fertigungsprozess verbunden. Ebenfalls nachteilig ist, dass mit der Geräuschreduzierung durch die Zusatzmassen ein relativ hoher Materialaufwand verbunden ist.

Die DE 103 16 321 A offenbart ein weiteres Getriebegehäuse mit welchem die Verlagerungen und damit die Spannungen im Bereich der Lagerung der Zwischenwelle des Rückwärtsgangzwischenrades verringert werden. Das Getriebegehäuse, welches wenigstens eine Belastung aufnehmende Lagerstelle umfasst, weist auf seiner Oberfläche Versteifungsrippen auf. Diese nehmen die Belastung aus der Lagerstelle auf und führen sie aus dem Bereich der Lagerstelle in die Bereiche des Getriebegehäuses ab, an denen eine hohe Steifigkeit gegeben ist und die die Belastung aufnehmen können.

Als nachteilig wird auch bei dieser Ausführungsform der mit den Versteifungsrippen des Getriebegehäuses erhöhte Materialbedarf empfunden. Darüber hinaus kann das Vorhandensein von Rippen beim Putzen nach dem Entformen hinderlich sein, und insbesondere bei innenliegenden Rippen kann eine Behinderung des Ölablaufes gegeben sein.

DE 10 2007 009 566 A offenbart ein Getriebegehäuse mit einem strukturierten Gehäuseboden.

DE 203 09 913 U offenbart ein strukturiertes Lagerschild, wobei eben ausgebildete Wandungsbereiche zueinander in der Wanddickenrichtung versetzt sind und eine konstante Wanddicke besitzen.

Der vorliegenden Erfindung liegt demzufolge die Aufgabe zugrunde, ein leicht zu fertigendes Getriebegehäuse anzugeben, bei welchem im Betrieb die Schwingungsanregung der geräuschabstrahlenden Oberflächen des Gehäuses unterbunden wird, bzw. möglichst gering ausfällt. Der Materialaufwand sollte dabei möglichst niedrig ausfallen und das Getriebegehäuse dennoch eine hohe Stabilität aufweisen.

Diese Aufgabe wird durch die Merkmale des Anspruchs 1 gelöst.

Die Gehäusewandung weist wenigstens einen strukturierten Wandungsbereich auf, der unterteilt ist in mehrere im Wesentlichen eben ausgebildete Gehäuseflächenelemente, die benachbart zueinander angeordnet und gegeneinander in der Wanddickenrichtung versetzt sind, wobei benachbarte Wandungsbereiche einen im Wesentlichen konstant bleibende Wandstärke besitzen.

Bei der erfindungsgemäßen Ausgestaltung ist der strukturierte Wandungsbereich in mehrere im Wesentlichen eben ausgebildete, gegeneinander versetzte Gehäuseflächenelemente unterteilt. Durch diese Strukturierung des Wandungsbereichs wird die Weiterleitung von Schwingungen gestört mit der Folge, dass die Anregung zu Schwingungen, welche durch große Flächen begünstigt wird, unterbunden und damit die Schallabstrahlung des Getriebegehäuses minimiert wird. Darüber hinaus resultiert der Versatz der Gehäuseflächenelemente in eine höhere Steifigkeit des Getriebegehäuses. Demzufolge ist eine geringe Wandstärke ausreichend. Insbesondere auf Verdickungen oder Rippen, wie sie im Stand der Technik zur Versteifung des Gehäuses eingesetzt werden, kann verzichtet werden, so dass der strukturierte Wandbereich eine im Wesentlichen konstante Wandstärke aufweisen kann, d.h. die Innen- und Außenflächen des strukturierten Wandungsbereichs im Wesentlichen parallel zueinander verlaufen. Abweichungen sind in einem gewissen Maß möglich. Grundsätzlich sollte in dem strukturierten Wandungsbereich das Verhältnis zwischen der maximalen Wandstärke und der minimalen Wandstärke ≤ 1,3 und insbesondere ≤ 1,15 sein. Gewünschtes Ziel ist es allerdings, tatsächlich eine konstante Wandstärke zu erhalten. Damit lässt sich das Getriebegehäuse im Gießverfahren einfach herstellen. Im Übergangsbereich zwischen den in Wanddickenrichtung gegeneinander versetzten Grundflächenelementen kann es dann fertigungsbedingt zu Abweichungen von der im Wesentlichen konstant bleibenden Wandstärke kommen.

Erfindungsgemäß beträgt der Versatz zwischen benachbarten Gehäuseflächenelementen wenigstens das 0,3fache und maximal das 1,5fache der Wandstärke des Wandungsbereiches . Durch einen geringen Versatz benachbarter Gehäuseflächenelemente in Wanddickenrichtung wird die Vergrößerung des Getriebegehäuses durch die Strukturierung möglichst gering gehalten.

In einem weiteren Ausführungsbeispiel der vorliegenden Erfindung ist vorgesehen, dass zumindest ein Teil der Gehäuseflächenelemente wenigstens zwei nicht parallele Seiten aufweist. Dabei ist es besonders vorteilhaft, wenn wenigstens ein Teil der Gehäuseflächenelemente dreieckig, trapezförmig oder halbkreisförmig ausgebildet ist. Diese Formen der Gehäuseflächenelemente haben sich als besonders geeignet zur Unterdrückung von Schwingungsanregungen gezeigt.

Für die Reduktion der Geräuschentwicklung ist es besonders vorteilhaft, wenn der strukturierte Wandungsbereich an mehreren, insbesondere allen Seiten des Gehäuses vorgesehen ist.

Erfindungsgemäß ist vorgesehen, dass der wenigstens eine strukturierte Wandungsbereich wenigstens 60%, insbesondere wenigstens 80% des Gehäusebodens ausmacht. Um ein möglichst hohes Maß an Schwingungsunterdrückung der Gehäusewandung zu erzielen, sollte ein möglichst großer Bereich der Gehäuseaußenfläche mit den erfindungsgemäßen strukturierten Wandungsbereichen versehen sein.

Erfindungsgemäß ist vorgesehen , dass der wenigstens eine strukturierte Wandungsbereich wenigstens ein erstes Wandflächenelement oder eine Gruppe von ersten Wandflächenelementen sowie wenigstens ein zweites Gehäuseflächenelement oder eine Gruppe von zweiten Gehäuseflächenelementen aufweist, wobei das zweite Gehäuseflächenelement oder die Gruppe von zweiten Gehäuseflächenelementen zur Gehäuseinnenseite hin gegenüber dem ersten Gehäuseflächenelement bzw. der ersten Gruppe von Gehäuseflächenelementen versetzt ist.

Die zweiten Gehäuseflächenelemente können sich dabei vom Rand des betroffenen strukturierten Wandungsbereiches zur Wandungsmitte hin erstrecken.

Darüber hinaus kann vorgesehen sein, dass die zweiten Grundflächenelemente eine übereinstimmende Form besitzen und insbesondere parallel zueinander angeordnet sind, wobei sich die zweiten Grundflächenelemente von gegenüberliegenden Randbereichen zur Mitte des betreffenden strukturierten Wandungsbereiches hin erstrecken. Dabei kann der strukturierte Wandungsbereich achsensymmetrisch bezüglich einer Achse, insbesondere seiner Längsachse, ausgebildet sein. Diese Ausführungsform hat sich als besonders geeignet zur Reduzierung der Schwingungsanregung erwiesen.

Da erfindungsgemäß die zweite Gruppe von Gehäuseflächenelementen wenigstens 30% des strukturierten Wandungsbereiches ausmacht, wird eine ausgeprägte Reduzierung der Anregung gewährleistet .

Hinsichtlich weiterer vorteilhafter Ausgestaltungen und Weiterbildungen der Erfindung wird auf die Unteransprüche sowie nachfolgende Beschreibung eines Ausführungsbeispiels unter Bezugnahme auf die beiliegende Zeichnung verwiesen. In der Zeichnung zeigt:
- Figur 1: eine perspektivische Darstellung eines Getriebegehäuses;
- Figur 2: eine Schnittdarstellung durch eine Gehäusewand.

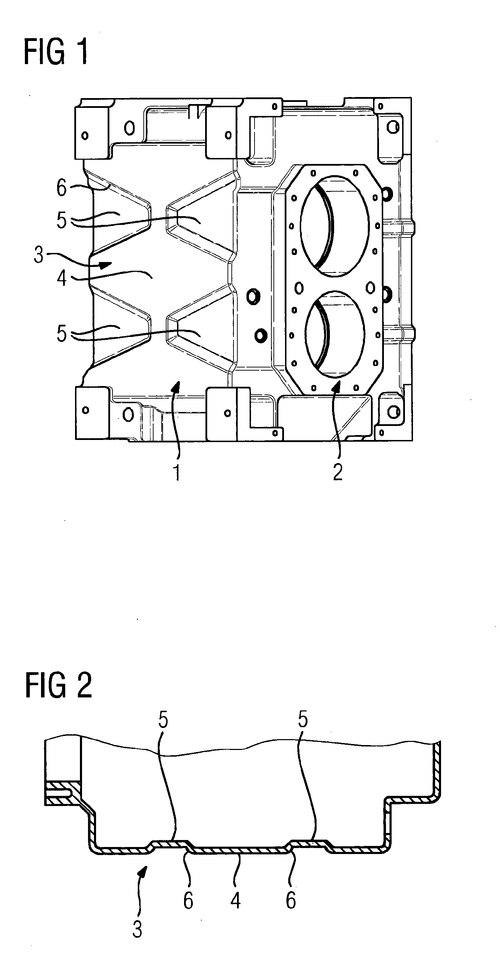

In der Zeichnung ist ein erfindungsgemäßes Getriebegehäuse dargestellt. Das Getriebegehäuse, das in üblicher Weise im Gießverfahren hergestellt ist und aus mehreren Bauteilen bestehen kann, ist im Wesentlichen quaderförmig ausgebildet und umfasst eine Gehäusewandung, die einen Gehäuseboden 1, vier Gehäuseseitenwände 2 und einen nicht gezeigten Gehäusedeckel umfasst. Der Gehäuseboden 1 weist einen strukturierten Wandungsbereich 3 auf, der unterteilt ist in mehrere im Wesentlichen eben ausgebildete, benachbarte Gehäuseflächenelemente 4,5, die - wie insbesondere in der Figur 1 gut erkennbar ist - in der Wanddickenrichtung gegeneinander versetzt angeordnet sind. Die Gehäuseflächenelemente 4,5 sind dabei über schräge Übergangsbereiche 6 miteinander verbunden, was in Figur 2 gut erkennbar ist. Durch diese Strukturierung des Wandungsbereichs 3 wird die Weiterleitung von Schwingungen gestört mit der Folge, dass die Anregung zu Schwingungen, welche durch große Flächen begünstigt wird, unterbunden und damit die Schallabstrahlung des Getriebegehäuses minimiert wird. Darüber hinaus resultiert der Versatz der des Getriebegehäuses. Konkret umfasst der strukturierte Wandungsbereich 3 ein zentrales erstes Gehäuseflächenelement 4 und eine Gruppe von vier trapezförmigen (zweiten) Gehäuseflächenelementen 5, die gegenüber dem zentralen ersten Gehäuseflächenelement 4 zur Gehäuseinnenseite hin versetzt liegen. Dabei sind an den Längsseiten des Gehäusebodens 1 jeweils zwei trapezförmige Gehäuseflächenelemente 5 vorgesehen, die sich von den Rändern des Gehäusebodens 1 zur Gehäusebodenmitte hin erstrecken, wobei ihre Basis jeweils an dem entsprechenden Rand des Gehäusebodens 1 liegt. Wie die Figur 1 gut erkennen lässt, besitzen die trapezförmigen Gehäuseflächenelemente 5 eine übereinstimmende Form und Größe, die so gewählt ist, dass die vertieften trapezförmigen Gehäuseflächenelemente 5 etwa 40% der Gesamtfläche des strukturierten Wandungsbereichs 3 einnehmen. Insgesamt ist der strukturierte Wandungsbereich 3 so aufgebaut, dass er achsensymmetrisch bezüglich seiner Längsachse ist.

Wie man dem Querschnitt der Figur 2 entnehmen kann, verlaufen die Innen- und Außenflächen des strukturierten Wandungsbereiches 3 etwa parallel zueinander mit der Folge, dass der strukturierte Wandungsbereich 3 eine gleichbleibende Wandstärke ohne Verdickungen aufweist.

## Patentansprüche

1. Getriebegehäuse mit einer Gehäusewandung, wobei die Gehäusewandung wenigstens einen strukturierten Wandungsbereich (3) aufweist, der unterteilt ist in mehrere im Wesentlichen eben ausgebildete Gehäuseflächenelemente (4,5), die benachbart zueinander angeordnet und gegeneinander in der Wanddickenrichtung versetzt sind, wobei benachbarte Wandungsbereiche (3) eine im Wesentlichen konstant bleibende Wandstärke besitzen,
wobei der wenigstens eine strukturierte Wandungsbereich (3) an einem Gehäuseboden (1) ausgebildet ist, und wenigstens 60%, insbesondere wenigstens 80% des Gehäusebodens ausmacht, wobei der Versatz zwischen benachbarten Gehäuseflächenelementen (4, 5) wenigstens das 0,3-fache und maximal das 1,5 fache der Wandstärke des Wandungsbereiches (3) beträgt, und der wenigstens eine strukturierte Wandungsbereich (3) wenigstens ein erstes Gehäuseflächenelement (4) oder eine Gruppe von ersten Gehäuseflächenelementen (4) sowie wenigstens ein zweites Gehäuseflächenelement (5) oder eine Gruppe von zweiten Gehäuseflächenelementen (5) aufweist, wobei das zweite Gehäuseflächenelement (5) oder die Gruppe von zweiten Gehäuseflächenelementen (5) zur Gehäuseinnenseite hin gegenüber dem ersten Gehäuseflächenelement (4) bzw. der ersten Gruppe von Gehäuseflächenelementen (4) versetzt ist, und wobei die zweite Gruppe von Gehäuseflächenelementen (5) wenigstens 30% des strukturierten Wandungsbereiches (3) ausmacht.

2. Getriebegehäuse nach Anspruch 1,
**dadurch gekennzeichnet, dass** die Innen- und Außenflächen des wenigstens einen strukturierten Wandungsbereiches (3) im Wesentlichen parallel zueinander verlaufen.

3. Getriebegehäuse nach Anspruch 1 oder 2,
**dadurch gekennzeichnet, dass** in dem strukturierten Wandungsbereich (3) das Verhältnis zwischen der maximalen Wandstärke und der minimalen Wandstärke ≤ 1,3 und insbesondere ≤ 1,15 ist.

4. Getriebegehäuse nach einem der vorherigen Ansprüche,
**dadurch gekennzeichnet, dass** zumindest ein Teil der Gehäuseflächenelemente (4,5) wenigstens zwei nicht parallele Seiten aufweist.

5. Getriebegehäuse nach Anspruch 4,
**dadurch gekennzeichnet, dass** wenigstens ein Teil der Gehäuseflächenelemente (4,5) dreieckig, trapezförmig oder halbkreisförmig ausgebildet ist.

6. Getriebegehäuse nach Anspruch 1,
**dadurch gekennzeichnet, dass** die zweiten Gehäuseflächenelemente (5) sich vom Rand des betroffenen strukturierten Wandungsbereiches (3) zur Wandungsmitte hin erstrecken.

7. Getriebegehäuse nach Anspruch 6,
**dadurch gekennzeichnet, dass** die zweiten Gehäuseflächenelemente (5) eine übereinstimmende Form besitzen und insbesondere parallel zueinander angeordnet sind.

8. Getriebegehäuse nach einem der Ansprüche 6 oder 7,
**dadurch gekennzeichnet, dass** die zweiten Gehäuseflächenelemente (5) sich von gegenüberliegenden Randbereichen zur Mitte des betreffenden strukturierten Wandungsbereiches (3) erstrecken.

9. Getriebegehäuse nach Anspruch 8,
**dadurch gekennzeichnet, dass** die strukturierten Wandungsbereiche (3) achsensymmetrisch bezüglich einer Achse, insbesondere bezüglich ihrer Längsachse sind.

## Claims

1. Transmission housing with housing walling, wherein the housing walling has at least one structured walling area (3), which is divided into a number of housing surface elements (4, 5) essentially embodied flat, which are disposed adjacent to one another and are offset in relation to one another in the wall depth direction, wherein adjacent walling areas (3) have a wall thickness which essentially remains constant, wherein the at least one structured walling area (3) is embodied on a housing floor (1) and makes up at least 60%, especially at least 80% of the housing floor, wherein the offset between adjacent housing surface elements (4, 5) amounts to at least 0.3 times and to a maximum of 1.5 times the wall thickness of the walling area (3), and the at least one structured walling area (3) has at least one first housing surface element (4) or a group of first housing surface elements (4) as well as at least one second housing surface element (5) or a group of second housing surface elements (5), wherein the second housing surface element (5) or the group of second housing surface elements (5) is offset to the inside of the housing in relation to the first housing surface element (4) or the first group of housing surface elements (4), and wherein the second group of housing surface elements (5) makes up at least 30% of the structured walling area (3).

2. Transmission housing according to claim 1,
**characterised in that** the inner and outer surfaces of the at least one structured walling area (3) essentially run in parallel to one another.

3. Transmission housing according to claim 1 or 2, **characterised in that**, in the structured walling area (3), the ratio between the maximum wall thickness and the minimum wall thickness is ≤ 1.3 and especially ≤ 1.15.

4. Transmission housing according to one of the preceding claims, **characterised in that** at least some of the housing surface elements (4, 5) have at least two non-parallel sides.

5. Transmission housing according to claim 4,
**characterised in that** at least some of the housing surface elements (4, 5) are embodied triangular, trapezoidal or semicircular in shape.

6. Transmission housing according to claim 1,
**characterised in that** the second housing surface elements (5) extend from the edge of the structured walling area (3) concerned to the middle of the walling.

7. Transmission housing according to claim 6,
**characterised in that** the second housing surface elements (5) have a matching shape and are especially disposed in parallel to one another.

8. Transmission housing according to one of claims 6 or 7,
**characterised in that** the second housing surface elements (5) extend from opposite edge areas to the middle of the structured walling area (3) concerned.

9. Transmission housing according to claim 8,
**characterised in that** the structured walling areas (3) are axis-symmetrical in relation to one axis, especially in relation to their longitudinal axis.

## Revendications

1. Carter de transmission ayant une paroi de carter, la paroi de carter ayant au moins une partie ( 3 ) de paroi structurée, qui est subdivisée en plusieurs éléments ( 4, 5 ) de surface du carter, qui sont constitués de manière sensiblement plane, qui sont voisins les uns des autres et qui sont décalés les uns par rapport aux autres dans la direction de l'épaisseur de la paroi, des parties ( 3 ) de paroi voisines ayant une épaisseur de paroi restant sensiblement constante,
dans lequel la au moins une partie ( 3 ) de paroi structurée est constituée sur un fond ( 1 ) de carter et représente au moins 60%, notamment au moins 80% du fond du carter, le décalage entre des éléments ( 4, 5 ) de surface du carter voisins représentant au moins 0,3 fois et au maximum 1,5 fois l'épaisseur de paroi de la partie ( 3 ) de paroi et la au moins une partie ( 3 ) de paroi structurée a au moins un premier élément ( 4 ) de surface du carter ou un groupe de premiers éléments ( 4 ) de surface du carter, ainsi qu'au moins un deuxième élément ( 5 ) de surface ou un groupe de deuxièmes éléments ( 5 ) de surface du carter, le deuxième élément ( 5 ) de carter ou le groupe de deuxièmes éléments ( 5 ) de surface du carter étant décalé vers la face intérieur du carter par rapport au premier élément ( 4 ) de surface de carter ou du premier groupe d'éléments ( 4 ) de surface du carter, et le deuxième groupe d'éléments ( 5 ) de surface du carter représentant au moins 30% de la partie ( 3 ) de paroi structurée.

2. Carter de transmission suivant la revendication 1,
**caractérisé en ce que** les surfaces intérieure et extérieure de la au moins une partie ( 3 ) de paroi structurée s'étendent sensiblement parallèlement l'une à l'autre.

3. Carter de transmission suivant la revendication 1 ou 2,
**caractérisé en ce que**, dans la partie ( 3 ) de paroi structurée, le rapport entre l'épaisseur maximum de paroi et l'épaisseur minimum de paroi est ≤ 1,3 et notamment ≤1,15.

4. Carter de transmission suivant l'une des revendications précédentes,
**caractérisé en ce qu'**au moins une partie des éléments ( 4, 5 ) de surface du carter a au moins deux faces qui ne sont pas parallèles.

5. Carter de transmission suivant la revendication 4,
**caractérisé en ce qu'**au moins une partie des éléments ( 4, 5 ) de surface du carter est triangulaire, trapézoïdale ou hémicirculaire.

6. Carter de transmission suivant la revendication 1,
**caractérisé en ce que** les deuxièmes éléments ( 5 ) de surface du carter s'étendent du bord de la partie ( 3 ) de paroi structurée concernée au milieu de la paroi.

7. Carter de transmission suivant la revendication 6,
**caractérisé en ce que** les deuxièmes éléments ( 5 ) de surface du carter ont une forme en coïncidence et sont notamment disposés parallèlement entre eux.

8. Carter de transmission suivant la revendication 6 ou 7, **caractérisé en ce que** les deuxièmes éléments ( 5 ) de surface du carter s'étendent des parties de bord opposées au milieu de la partie ( 3 ) de paroi structurée concernée.

9. Carter de transmission suivant la revendication 8,
**caractérisé en ce que** les parties ( 3 ) de paroi structurées sont symétriques par rapport à un axe, notamment par rapport à leur axe longitudinal.
